# FASCICULE DE BREVET EUROPEEN

(11) **EP 3 323 958 B1**
(45) Date de publication et mention de la délivrance du brevet: **11.09.2019**
(21) Numéro de dépôt: 17192624.9
(22) Date de dépôt: 22.09.2017
(51) Int. Cl.: F16B 2/14, F16B 9/02, E04F 11/18

(54) **AGENCEMENT POUR LA FIXATION D'UN PANNEAU DANS UNE RAINURE AU MOYEN DE DEUX COINS OPPOSÉS**
ANORDNUNG ZUR BEFESTIGUNG EINES PANEELS IN EINER NUT MITTELS ZWEIER GEGENÜBERLIEGENDER KEILE
ARRANGEMENT FOR ATTACHING A PANEL TO A GROOVE BY TWO OPPOSING WEDGES

(30) Priorité: 17.11.2016 FR 1661143
(43) Date de publication de la demande: 23.05.2018
(73) Titulaire: SB Ingénierie, 74330 Poisy (FR)
(72) Inventeur: DAGAND, Cyril, 74150 RUMILLY (FR); BORROD, Wilfried, 74330 Nonglard (FR)
(74) Mandataire: Gevers & Orès

(56) Documents cités:
- EP-A1- 3 009 580
- EP-A2- 2 921 607
- DE-A1-102006 028 766

## Description

### DOMAINE TECHNIQUE DE L'INVENTION

L'invention concerne un agencement pour la fixation d'un panneau vertical dans une rainure longitudinale de réception par serrage transversal entre au moins deux coins opposés transversalement, l'agencement comportant :
- au moins un premier coin qui est intercalé entre une première face verticale de la rainure et une première face du panneau ;
- au moins un deuxième coin opposé monté en vis-à-vis du premier coin de l'autre côté du panneau, le deuxième coin étant intercalé entre une deuxième face verticale opposée de la rainure et une deuxième face opposée du panneau, le deuxième coin coopérant par coulissement vertical avec une deuxième rampe fixe pour régler la verticalité du panneau ;
- au moins un ensemble vis-écrou destiné à produire un effort de translation vertical du deuxième coin dans une direction de serrage entre le panneau et la deuxième face de la rainure.

### ARRIERE PLAN TECHNIQUE DE L'INVENTION

Il est connu de réaliser des garde-corps par fixation d'un panneau vertical dans la rainure d'un rail. Un tel panneau est par exemple réalisé en verre.

Classiquement, la mise en position et la fixation d'un panneau de garde-corps dans la rainure est réalisé par l'insertion d'au moins deux coins opposés de part et d'autre du panneau. Afin de pouvoir ajuster la verticalité du panneau en même temps que sa fixation, le serrage de chaque coin est ajusté au moyen d'un ensemble vis-écrou associé. Le coin est ainsi serré soit par déplacement de la vis, soit par déplacement de l'écrou lors du vissage de la vis.

Chaque ensemble vis-écrou est agencé du même côté du panneau que le coin dont il commande le serrage. Ainsi, lors du montage du garde-corps, un opérateur installe tout d'abord le panneau dans la rainure. L'opérateur accède ensuite à un premier côté du panneau pour ajuster le serrage du premier coin. Puis l'opérateur accède ensuite à l'autre côté du panneau pour ajuster le serrage du deuxième coin opposé.

Un exemple d'un tel agencement pour la fixation d'un panneau est par exemple divulgué dans le document EP-A2-2.921.607.

Un tel agencement permet une fixation très résistante du panneau dans la rainure tout en permettant d'ajuster facilement la verticalité du panneau.

Cependant, dans certain cas, le panneau n'est facilement accessible que d'un seul côté. C'est notamment le cas lorsque le garde-corps est agencé en altitude. Il en résulte l'impossibilité de visser correctement le coin qui est située sur l'autre côté inaccessible sans utilisé un moyen de levage tel qu'une nacelle ou un échafaudage.

Pour résoudre ce problème on a déjà proposé des agencements de fixation ne comportant des coins que du côté accessible.

Cependant un tel agencement ne permet pas une fixation efficace du panneau dans le rail.

De plus, un tel agencement ne permet pas d'ajuster facilement la verticalité du panneau pendant l'opération de fixation.

### BREF RESUME DE L'INVENTION

L'invention propose un agencement de fixation de garde-corps du type décrit précédemment, caractérisé en ce que l'ensemble vis-écrou est agencé du même côté du panneau que le premier coin, l'effort de translation étant transmis au deuxième coin par l'intermédiaire d'un organe de renvoi mobile qui est interposé entre un chant inférieur du panneau et le fond de la rainure.

Un tel agencement de fixation permet de préserver les avantages d'un agencement de fixation à deux coins opposés tout en permettant la fixation depuis un seul côté du panneau.

Selon d'autres caractéristiques de l'invention :
- l'organe de renvoi est une pièce rigide montée à rotation autour d'un axe longitudinal entre le fond de la rainure et le chant inférieur du panneau ;
- l'organe de renvoi est un organe souple qui travaille en traction autour d'un support fixe de renvoi d'angle qui contourne le chant inférieur du panneau ;
- le support fixe de renvoi d'angle est réalisé dans un berceau qui enfourche le chant inférieur du panneau et qui est interposé entre le panneau et le fond de la rainure ;
- la direction de serrage du deuxième coin est dirigée vers le fond de la rainure, l'organe de renvoi travaillant en traction lors du serrage du coin.
- l'effort de translation vertical est produit par déplacement de l'écrou verticalement vers une ouverture supérieure de la rainure, une première extrémité de l'organe de renvoi étant solidaire en déplacement avec l'écrou et une deuxième extrémité de l'organe de renvoi étant solidaire en déplacement avec ledit deuxième coin ;
- la direction de serrage d'au moins un deuxième coin opposé est dirigée vers une ouverture supérieure de la rainure, l'organe de renvoi travaillant en compression lors du serrage du coin ;
- l'organe de renvoi glisse le long d'une trajectoire en arc de cercle parallèlement au fond de la rainure ;
- l'effort de translation vertical est produit par le déplacement de la vis vers le fond de la rainure, une première extrémité de l'organe de renvoi étant sollicitée en appui par la vis et une deuxième extrémité de l'organe de renvoi sollicitant le coin par appui ;
- l'agencement comporte deux deuxièmes coins opposés qui présentent des directions de serrage verticales opposées, chaque deuxième coin étant commandé en coulissement respectivement par l'écrou et par la vis du même ensemble vis-écrou.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un panneau vertical fixé dans un rail au moyen de dispositifs de fixation réalisés selon les enseignements de l'invention ;
- la figure 2 est une vue en perspective éclatée qui représente le dispositif de fixation de la figure 1 ;
- la figure 3 est une vue en section selon un plan de coupe transversal vertical passant par une vis de serrage qui représente le dispositif de fixation de la figure 2 mis en position dans un rail, la vis de serrage commandant le serrage de deux premiers coins ;
- la figure 4 est une vue en section selon un plan de coupe parallèle à celui de la figure 3 et passant par un premier organe de renvoi en compression qui représente la chaine de transmission de l'effort de translation vertical depuis une vis jusqu'à un deuxième coin inférieur situé du côté opposé à la vis par rapport au panneau ;
- la figure 5 est une vue en section selon un plan de coupe parallèle à celui de la figure 3 et passant par un deuxième organe de renvoi en traction qui représente la chaine de transmission de l'effort de translation vertical depuis un écrou jusqu'à un deuxième coin supérieur situé du côté opposé de l'écrou par rapport au panneau.

### DESCRIPTION DETAILLEE DES FIGURES

Dans la suite de la description, on adoptera à titre non limitatif des orientations longitudinale, verticale et transversale indiquées par le trièdre "L,V,T" des figures.

Dans la suite de la description, des éléments présentant une structure identique ou des fonctions analogues seront désignés par une même référence.

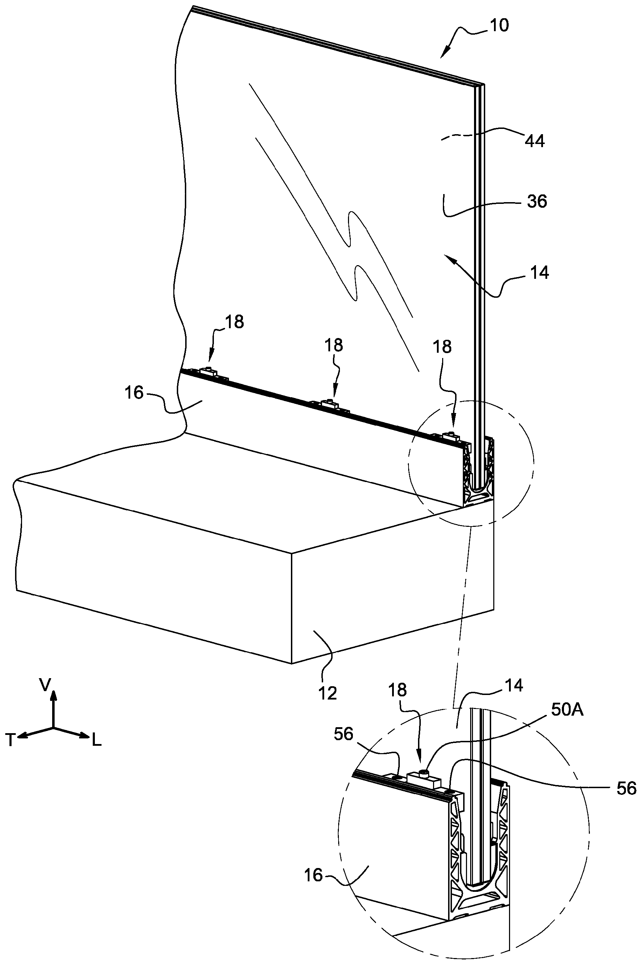

On a représenté à la figure 1 un garde-corps 10 qui est monté en bordure d'une dalle 12, par exemple une dalle de béton. La bordure de la dalle 12 est ici difficilement accessible, elle est par exemple agencée en altitude.

Le garde-corps 10 comporte un panneau 14 vertical et un rail 16 de support. Le panneau 14 est préférentiellement en verre. Il est maintenu verticalement dans le rail 16 de support par plusieurs dispositifs 18 de fixation. Chaque dispositif 18 de fixation est conçu pour permettre de fixer fermement le panneau 14 dans une position verticale et pour résister à des charges très importantes.

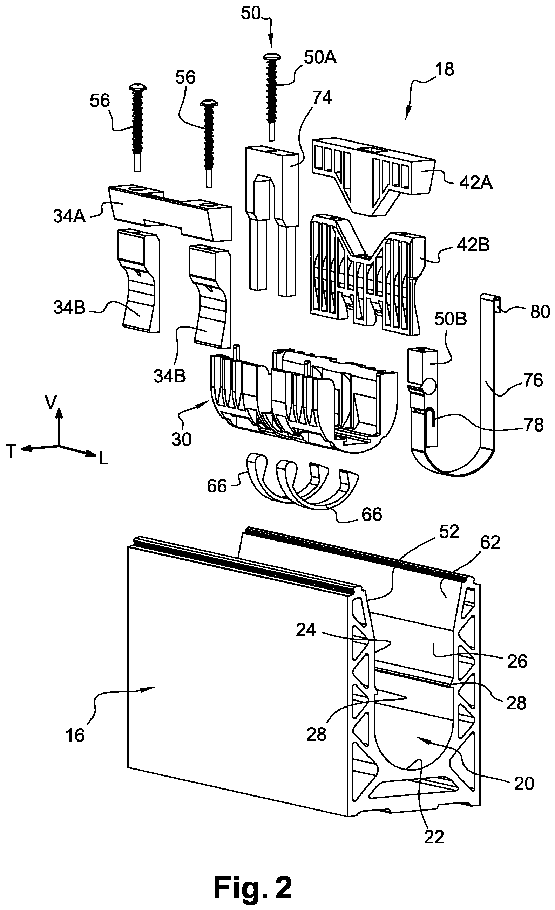

Comme cela est illustré plus en détail à la figure 2, le rail 16 de support est formé à titre d'exemple par un profilé en aluminium, ayant ici une section transversale en "U" délimitant à l'intérieur, une rainure 20 de réception du panneau 14 et du dispositif 18 de fixation. Le rail 16 de support s'étend de manière continue dans la direction longitudinale. Le rail 16 de support est destiné à être fixé à la dalle 12.

La rainure 20 présente un fond 22 de forme courbe concave, de préférence semi-circulaire, prolongée par deux faces 24, 26 verticales opposées agencées transversalement en vis-à-vis l'une de l'autre. La rainure 20 présente une ouverture supérieure. La largeur de la rainure 20 entre les deux faces latérales 24, 26 est supérieure à l'épaisseur du panneau 14. La première face 24 verticale est située du côté accessible du rail, tandis que la deuxième face 26 verticale est située du côté inaccessible du rail.

Chaque dispositif 18 de fixation est conçu comme un module formé de plusieurs pièces dont certaines peuvent être préassemblées avant leur insertion dans la rainure 20. On décrit à présent un dispositif 18 de fixation en référence aux figures 2 à 5.

Le dispositif 18 de fixation comporte au moins deux coins 34A, 34B ; 42A, 42B opposés qui sont destinés à serrer transversalement le panneau 14 vertical dans la rainure 20 longitudinale de réception.

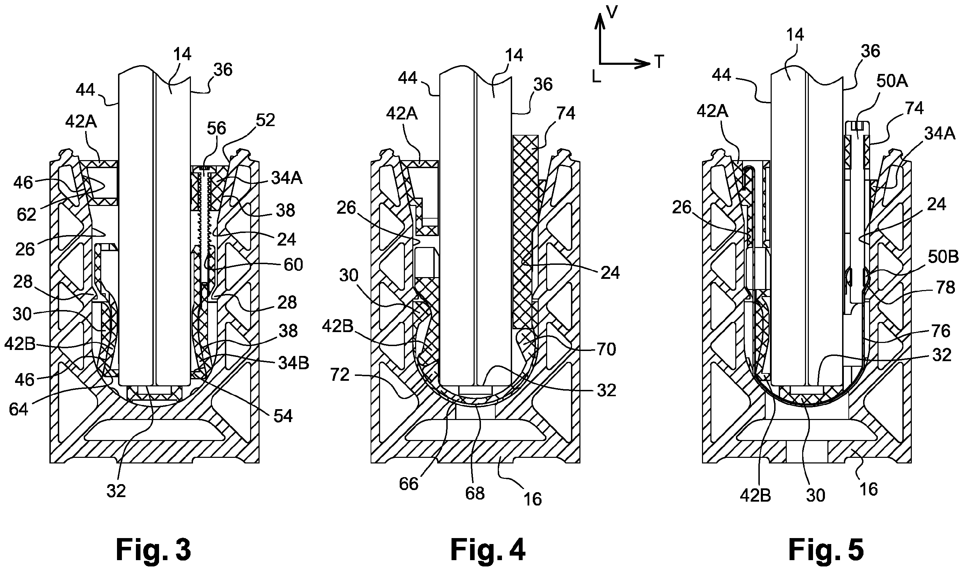

Le dispositif 18 de fixation comporte aussi un berceau 30 qui est conçu pour enfourcher un chant 32 inférieur du panneau 14, comme cela est représenté à la figure 3. Le berceau 30 présente une face inférieure arrondie de forme complémentaire à celle du fond 22 de la rainure 20 de réception. Le berceau 30 est reçu dans la rainure 20 avec un jeu transversal suffisant pour permettre un débattement angulaire du panneau 14 autour d'un axe longitudinal par glissement de la face inférieure du berceau 30 contre le fond 22. Ceci permet de régler la verticalité du panneau 14 en fonction de l'horizontalité de la dalle 12.

Chaque face 24, 26 verticale de la rainure comporte en outre une butée 28 en saillie qui est destiné à retenir verticalement le berceau 30 en fond de rainure 20.

Le berceau 30 est ici réalisé en matière plastique rigide.

Le dispositif 18 de fixation comporte au moins un premier coin 34A ou 34B qui est intercalé entre la première face 24 verticale de la rainure 20 et une première face 36 du panneau 14, comme cela est illustré à la figure 3. La première face 36 du panneau 14 est tournée vers le côté accessible de la dalle 12.

Le premier coin 34A ou 34B présente au moins une face 38 inclinée qui est destinée à coopérer avec une rampe fixe pour permettre son serrage par coulissement vertical. La rampe est solidaire soit du rail 16 de support, soit du berceau 30.

Le dispositif 18 de fixation comporte au moins un deuxième coin 42A ou 42B opposé monté en vis-à-vis du premier coin 34A, 34B de l'autre côté du panneau 14. Le deuxième coin 42A ou 42B est intercalé entre la deuxième face 26 verticale opposée de la rainure 20 et une deuxième face 44 opposée du panneau 14. La deuxième face 36 du panneau 14 est tournée vers le côté inaccessible de la dalle 12.

Le deuxième coin 42A ou 42B présente au moins une face 46 inclinée qui est destinée à coopérer par glissement avec une rampe fixe pour permettre son serrage par coulissement vertical. La rampe est solidaire soit du rail 16 de support, soit du berceau 30.

Le coulissement vertical de chaque premier coin 34A, 34B et deuxième coin 42A, 42B permet ainsi de régler la verticalité du panneau 14 en même temps que de le fixer en position verticale par serrage transversal entre les coins 34A, 34B ; 42A, 42B.

Au moins le deuxième coin 42A, 42B est commandé en coulissement par un ensemble 50 vis-écrou qui est destiné à produire un effort de translation vertical du deuxième coin 42A, 42B dans une direction de serrage entre le panneau 14 et la deuxième face 26 de la rainure 20.

Chaque coin 34A, 34B, 42A, 42B est coulissant le long d'une course très courte de l'ordre de quelques millimètres.

Cependant, le réglage de l'ensemble 50 vis-écrou ne peut être effectué qu'après avoir inséré le panneau 14 dans la rainure 20. Le deuxième coin 42A, 42B est alors situé du côté inaccessible du panneau 14. Dans l'état de la technique, l'ensemble vis-écrou est agencé du côté inaccessible du panneau. Le serrage du deuxième coin ne pouvait s'effectué qu'en ayant recours à des moyens d'accès tels qu'un échafaudage ou une nacelle.

La présente invention propose un agencement pour la fixation du panneau 14 dans le rail 16 de support permettant de régler le serrage du deuxième coin 42A, 42B depuis le côté accessible du panneau 14.

L'invention propose ainsi d'agencer l'ensemble 50 vis-écrou du même côté du panneau 14 que le premier coin 32A, 32B. L'effort de translation produit par l'ensemble 50 vis-écrou est alors transmis au deuxième coin 42A, 42B par l'intermédiaire d'un organe de renvoi qui est interposé entre un chant inférieur du panneau 14 et le fond 22 de la rainure 20.

Dans le mode de réalisation représenté aux figures, le dispositif 18 de fixation comporte plusieurs premiers coins 34A, 34B. Il comporte ainsi, de manière non limitative, un premier coin 34A supérieur et deux premiers coins 34B inférieurs.

Le coin 34A supérieur coopère avec une rampe 52 qui est formé dans la partie supérieure de la première face 24 de la rainure 20. La rampe 52 est conçue pour que le serrage du coin 34A entre le panneau 14 et la première face 24 de la rainure 20 se produise lors de son coulissement vers le bas.

Les coins 34B inférieurs coopèrent chacun avec une rampe 54 associée du berceau 30 qui prend appui transversalement contre la première face 24 de la rainure 20. Les coins 34B inférieurs sont plus particulièrement interposés entre la rampe 54 et le panneau 14. La rampe 54 est conçue pour que le serrage du coin 34B entre le panneau 14 et la première face 24 de la rainure 20 se produise lors de son coulissement vers le haut.

Le coulissement du coin 34A supérieur et celui de chaque coin 34B inférieur est réalisé au moyen de deux vis 56 verticales. Chaque vis 56 est reçue dans un orifice 58 lisse associé percé dans le coin 34A supérieur au droit de chaque coin 34B inférieur. L'extrémité inférieure de chaque vis 56 est vissée dans un orifice 60 de chaque coin 34B inférieur. La vis 50A est par exemple vissée à force dans l'orifice 60. En variante l'orifice 60 est taraudé. En tous les cas, la vis 50A est en prise avec le coin 34B inférieur associé.

Ainsi, lorsque les vis 56 sont vissées, les coins 34B inférieurs, bloqués en rotation, coulissent vers le haut jusqu'à être coincés entre la rampe 54 et le panneau 14. En poursuivant le vissage, la tête de la vis prend appui sur le coin 34A supérieur pour le faire coulisser vers le bas jusqu'à être coincé entre la première face 24 de la rainure 20 et le panneau 14. Le vissage peut être poursuivi jusqu'à ce que les coins 34A, 34B soient serrés avec l'effort vertical désiré pour obtenir la fixation verticale du panneau 14. Outre la rapidité de fixation, ce système de réglage de la position du coin 34A et de chaque coin 34B avec une même vis 56 permet d'équilibrer l'effort de serrage appliqué par chaque coin 34A, 34B contre le panneau 14.

Le dispositif 18 de fixation comporte aussi deux deuxièmes coins 42A, 42B. Il comporte ainsi un deuxième coin 42A supérieur et un deuxième coin 42B inférieur. Ces deuxièmes coins 42A, 42B sont agencés en vis-à-vis des premiers coins 34A, 34B pour permettent un serrage du panneau 14 sur toute la hauteur de la portion de panneau 14 insérée dans la rainure 20. La fixation du panneau 14 dans le rail 16 de support est ainsi très solide et la fixation du panneau 14 est susceptible de résister même lorsqu'un effort transversal très important est appliqué à son bord supérieur.

Le deuxième coin 42A supérieur coopère avec une rampe 62 qui est formé dans la partie supérieure de la deuxième face 26 de la rainure 20. La rampe 62 est conçue pour que le serrage du deuxième coin 42A supérieur entre le panneau 14 et la deuxième face 26 de la rainure 20 se produise lors de son coulissement vers le bas.

Le coin 42B inférieur coopère avec une rampe 64 associée du berceau 30 qui prend appui transversalement contre la deuxième face 26 de la rainure 20. Le deuxième coin 42B inférieur est plus particulièrement interposé entre la rampe 64 et le panneau 14. La rampe 64 est conçue pour que le serrage du deuxième coin 42B inférieur entre le panneau 14 et la deuxième face 26 de la rainure 20 se produise lors de son coulissement vers le haut.

L'ensemble 50 vis-écrou commande ici simultanément le coulissement des deux deuxièmes coins 42A, 42B. Il comporte une vis 50A verticale et un écrou 50B. La tête de vis est dirigée vers le haut. L'ensemble 50 vis-écrou est interposé entre la première face 36 du panneau et la première face 24 de la rainure 20.

Le coulissement du deuxième coin 42B inférieur est ici commandé par le déplacement vertical de la vis 50A lors de son vissage. Le déplacement vertical de la vis 50A produit un effort de translation vertical qui est orienté vers le bas. Cet effort de translation vertical est transmis au deuxième coin 42B inférieur avec un changement de direction de manière à devenir un effort de translation vertical dirigé vers le haut afin de faire coulisser le deuxième coin 42B inférieur vers l'ouverture supérieure de la rainure 20.

La transmission de l'effort de translation vertical est réalisée au moyen d'au moins un premier organe 66 de renvoi. Dans le mode de réalisation représenté à la figure 2, le dispositif 18 de fixation comporte deux premiers organes 66 de renvoi qui travaillent en parallèle.

Comme représenté à la figure 4, chaque organe 66 de renvoi est une pièce rigide montée à rotation autour d'un axe longitudinal entre le fond 22 de la rainure 20 et le chant 32 inférieur du panneau 14. A cet effet, chaque organe 66 de renvoi présente une face 68 inférieure de guidage en forme d'arc de cercle complémentaire de la courbure du fond 22 de la rainure 20. L'axe de rotation est ainsi excentré verticalement vers le panneau, l'organe 66 de renvoi coulissant d'un bloc le long d'une trajectoire en arc de cercle.

L'organe 66 de renvoi présente ici la forme d'un segment courbe qui est agencé dans un canal de guidage formé dans le berceau 30. La face 68 inférieure de l'organe 66 de renvoi est ici en appui contre une cloison inférieure du berceau 30 qui est interposée entre ledit organe 66 de renvoi et le fond 22 de la rainure 20. Cette cloison inférieure présente une forme d'arc de cercle complémentaire du fond 22 de la rainure 20. Cet agencement permet d'éviter que l'organe 66 de renvoi ne soit appuyé directement contre le fond 22 de la rainure 20, ce qui provoquerait un soulèvement du berceau 30 lors du serrage du coin 42B correspondant. Au contraire, en prenant appui sur une cloison inférieure du berceau 30, le berceau 30 demeure contre le fond 22 de la rainure 20 quel que soit l'état de serrage du coin 42B correspondant.

L'organe 66 de renvoi présente une première extrémité 70 qui est agencée du côté accessible panneau 14 et qui est destinée à être sollicitée par la vis 50A. Il comporte aussi une deuxième extrémité 72 qui est destinée à solliciter le deuxième coin 42B inférieur.

Pour pouvoir pousser le coin 42B inférieur vers sa position de serrage, c'est-à-dire vers le haut, l'organe 66 de renvoi travaille en compression lors du serrage du coin 42B.

Dans le mode de réalisation représenté aux figures, les organes 66 de renvoi sont sollicités par l'intermédiaire d'un cavalier 74 monté coulissant verticalement dans la rainure 20 du côté accessible du panneau 14. Le cavalier comporte une traverse supérieure qui est équipée d'un orifice lisse destiné à recevoir la tige filetée de la vis 50A. La tête de la vis 50A repose sur une face supérieure de la traverse. Le cavalier 74 comporte deux pattes parallèles qui s'étendent verticalement vers le bas jusqu'à une extrémité inférieure de sollicitation des premières extrémités 70 des organes 66 de renvoi à la faveur de canaux de guidage réservés dans le berceau 30.

Les premiers coins 34A inférieurs sont agencés longitudinalement de part et d'autre du cavalier 74. Un passage vertical est réservé dans le premier coin 34A supérieur pour guider le cavalier 74 en coulissement vertical.

En variante non représentée de l'invention, au moins un organe 66 de renvoi est sollicité directement par l'extrémité inférieure de la vis 50A.

Selon une autre variante non représentée de l'invention, le premier organe de renvoi est un levier qui prend appui contre un point fixe, par exemple réalisé dans le fond du berceau. Le levier pivote ainsi autour d'un axe longitudinal situé sous le chant inférieur du panneau.

Le coulissement du deuxième coin 42A supérieur est ici commandé par le déplacement vertical de l'écrou 50B lors du vissage de la vis 50A. Le déplacement vertical de l'écrou 50B produit un effort de translation vertical qui est orienté vers le haut. Cet effort de translation vertical est transmis au deuxième coin 42A supérieur avec un changement de direction de manière à devenir un effort de translation vertical dirigé vers le bas afin de faire coulisser le deuxième coin 42A supérieur en direction du fond de la rainure 20.

La transmission de l'effort de translation vertical est réalisée au moyen d'au moins un deuxième organe 76 de renvoi. Dans le mode de réalisation représenté à la figure 2, le dispositif 18 de fixation comporte un seul deuxième organe 76 de renvoi.

Le deuxième organe de renvoi 76 est un organe souple qui travaille en traction autour d'un support fixe de renvoi d'angle qui contourne le chant 32 inférieur du panneau 14 par le bas.

Le support fixe de renvoi d'angle est formé par la face inférieure du berceau 30. Au besoin, une chemise (non représentée) de matériau résistant et/ou glissant peut être interposée entre le deuxième organe 76 de renvoi et la face inférieure du berceau 30. La face inférieure du berceau 30 présente une forme d'arc de cercle. Ainsi, le tronçon du deuxième organe 76 de renvoi qui est située contre le support fixe de renvoi d'angle est coulissante le long d'une trajectoire en arc de cercle, tandis que les deux brin d'extrémité de l'organe 76 de renvoi sont coulissant verticalement.

Le deuxième organe 76 de renvoi est ici formé par une lame souple, par exemple une lame de ressort métallique ou une lame en matériau composite. La lame est agencée à plat contre la face inférieure du berceau 30.

En variante non représentée, la lame formant le deuxième organe de renvoi est suffisamment large pour envelopper les premiers organes de renvoi. Ainsi, les premiers organes de renvoi glissent contre une face supérieure de la lame formant le deuxième organe de renvoi au lieu de glisser contre une paroi inférieure du berceau.

Selon une autre variante non représentée de l'invention, le deuxième organe de renvoi est formé par un câble.

Selon encore une autre variante non représentée de l'invention, l'organe de renvoi est formé par une chaîne d'éléments articulés.

Une première extrémité 78 du deuxième organe 76 de renvoi est agencée du côté accessible du panneau 14. Cette première extrémité 78 est solidaire en coulissement vertical de l'écrou 50B. Dans l'exemple représenté aux figures, la première extrémité 78 est recourbée en forme de crochet pour être accrochée à l'écrou 50B.

Une deuxième extrémité 80 du deuxième organe 76 de renvoi est agencée du côté inaccessible du panneau 14. Cette deuxième extrémité 80 est solidaire en coulissement vertical du deuxième coin 42A supérieur. Dans l'exemple représenté aux figures, la première extrémité 80 est recourbée en forme de crochet pour être accrochée au deuxième coin 42A supérieur.

On comprendra bien entendu que les extrémités du deuxième organe 76 de renvoi peuvent être fixées par d'autre moyens que l'accrochage, tels que le soudage, le collage, le surmoulage, le coincement de formes complémentaires...

L'écrou 50B est bien entendu conçu pour être immobilisé en rotation par rapport au rail 16. L'écrou 50B est ici logé entre les pattes du cavalier 74 afin de permettre son coulissement vertical le long de la vis 50A lors de son vissage/dévissage.

Lors du montage du panneau 14 dans le rail 16, le dispositif 18 de fixation est préassemblé. Ainsi, les coins 34B, 42A, 42B sont mis en position dans le berceau 30, à l'exception du premier coin 34A supérieur. L'ensemble 50 vis-écrou est également assemblé ainsi que les organes 66, 76 de renvoi. Le module ainsi préassemblé est inséré dans la rainure 20 du rail 16. Le panneau 14 est ensuite reçu dans le berceau 30 entre les coins 34B, 42A, 42B. Ainsi, tous les éléments situés du côté inaccessible du panneau 14 sont mis en position avant la mise en place du panneau 14. Le premier coin 34A supérieur est ensuite mis en position avec les vis 56 de serrage.

Lors du serrage des deuxièmes coins 42A, 42B, la vis 50A est vissée dans l'écrou 50B. Cette opération provoque le déplacement mutuel de la vis 50A vers le bas et de l'écrou 50B vers le haut.

Il s'ensuit que la tête de la vis 50A appui sur le cavalier 74 qui sollicite vers le bas, par l'intermédiaire de ses pattes les premiers organes 66 de renvoi. La face 68 de guidage de chaque premier organe 66 de renvoi glisse contre la cloison inférieure du berceau 30 de manière que la deuxième extrémité 72 vienne solliciter vers le haut le deuxième coin 42B inférieur dans sa position de serrage. Ainsi, l'effort de translation vertical est produit par le déplacement de la vis 50A vers le bas, une première extrémité 70 de l'organe 66 de renvoi étant sollicitée en appui par la vis 50A, ici par l'intermédiaire du cavalier 74, et une deuxième extrémité 72 de l'organe 66 de renvoi sollicitant le coin 42B par appui.

Simultanément, l'écrou 50B se déplace verticalement vers le haut en tirant sur le deuxième organe 76 de renvoi. Ce deuxième organe 76 de renvoi, prenant appui sur la face inférieure du berceau 30, tire le deuxième coin 42A supérieur vers le bas jusqu'à sa position de serrage. Ainsi, l'effort de translation vertical est produit par déplacement de l'écrou 50B verticalement vers le haut, une première extrémité 78 de l'organe de renvoi étant solidaire en déplacement avec l'écrou 50B et une deuxième extrémité 80 de l'organe étant solidaire en déplacement avec le deuxième coin 42A supérieur.

La commande du serrage des deuxièmes coins 42A, 42B par une ensemble 50 vis-écrou commun permet de régler rapidement le serrage des coins 42A, 42B par une seule opération de vissage. En outre, cela garantit que l'effort de serrage des coins 42A, 42B est équilibré.

Ainsi, les deuxième coins 42A, 42B agencés du côté inaccessible du panneau 14 sont serrés au moyen de la vis 50A qui est agencée du côté accessible du panneau 14. Plus particulièrement, la vis 50A est agencée à proximité des vis 56 de serrage des premiers coins 34A, 34B. Ainsi, un opérateur peut effectuer rapidement le réglage de la verticalité et la fixation du panneau 14 sans avoir à se déplacer. Les têtes de vis 50A, 56 sont accessibles par l'ouverture supérieure de la rainure 20 du même côté du panneau 14.

En variante non représentée de l'invention, le dispositif 18 de fixation comporte un seul deuxième coin 42A ou 42B qui peut être serré soit par coulissement vers le bas, soit par coulissement vers le haut. Un tel mode de réalisation est notamment applicable lorsque chaque dispositif de fixation comporte seulement deux coins opposés agencés chacun d'un côté du panneau.

L'invention a été décrite en application à la fixation d'un panneau de garde-corps dans un rail. On comprendra qu'elle est applicable à tout autre type de dispositif comportant un panneau devant être fixé dans un rail, par exemple une cloison en verre pour un guichet, un totem d'enseigne, etc.

## Revendications

1. Agencement pour la fixation d'un panneau (14) vertical dans une rainure (20) longitudinale de réception par serrage transversal entre au moins deux coins (34A, 34B ; 42A, 42B) opposés transversalement, l'agencement comportant :
- au moins un premier coin (34A, 34B) qui est intercalé entre une première face (24) verticale de la rainure (20) et une première face (36) du panneau (14) ;
- au moins un deuxième coin (42A, 42B) opposé monté en vis-à-vis du premier coin (34A, 34B) de l'autre côté du panneau (14), le deuxième coin (42A, 42B) étant intercalé entre une deuxième face (26) verticale opposée de la rainure (20) et une deuxième face (44) opposée du panneau (14), le deuxième coin (42A, 42B) coopérant par coulissement vertical avec une deuxième rampe (46, 62) fixe pour régler la verticalité du panneau (14) ;
- au moins un ensemble (50) vis-écrou destiné à produire un effort de translation vertical du deuxième coin (42A, 42B) dans une direction de serrage entre le panneau (14) et la deuxième face (26) de la rainure (20) ;
**caractérisé en ce que** l'ensemble (50) vis-écrou est agencé du même côté du panneau (14) que le premier coin (34A, 34B), l'effort de translation étant transmis au deuxième coin (42A, 42B) par l'intermédiaire d'un organe (66, 76) de renvoi mobile qui est interposé entre un chant (32) inférieur du panneau (14) et le fond (22) de la rainure (20).

2. Agencement selon la revendication précédente, **caractérisé en ce que** l'organe (66) de renvoi est une pièce rigide montée à rotation autour d'un axe longitudinal entre le fond (22) de la rainure (20) et le chant (32) inférieur du panneau (14).

3. Agencement selon la revendication 1, **caractérisé en ce que** l'organe (76) de renvoi est un organe souple qui travaille en traction autour d'un support (30) fixe de renvoi d'angle qui contourne le chant (32) inférieur du panneau (14).

4. Agencement selon la revendication précédente, **caractérisé en ce que** le support fixe de renvoi d'angle est réalisé dans un berceau (30) qui enfourche le chant (32) inférieur du panneau (14) et qui est interposé entre le panneau (14) et le fond (22) de la rainure (20).

5. Agencement selon l'une quelconque des revendications 3 à 4, **caractérisé en ce que** la direction de serrage du deuxième coin (42A) est dirigée vers le fond de la rainure, l'organe (76) de renvoi travaillant en traction lors du serrage du coin (42A).

6. Agencement selon la revendication précédente, **caractérisé en ce que** l'effort de translation vertical est produit par déplacement de l'écrou (50B) verticalement vers une ouverture supérieure de la rainure (20), une première extrémité (78) de l'organe (76) de renvoi étant solidaire en déplacement avec l'écrou (50B) et une deuxième extrémité (80) de l'organe (76) de renvoi étant solidaire en déplacement avec ledit deuxième coin (42A).

7. Agencement selon la revendication 2, **caractérisé en ce que** la direction de serrage d'au moins un deuxième coin (42B) opposé est dirigée vers une ouverture supérieure de la rainure (20), l'organe (66) de renvoi travaillant en compression lors du serrage du coin (42B).

8. Agencement selon la revendication précédente, **caractérisé en ce que** l'organe de renvoi glisse le long d'une trajectoire en arc de cercle parallèlement au fond (22) de la rainure (20).

9. Agencement selon la revendication précédente **caractérisé en ce que** l'effort de translation vertical est produit par le déplacement de la vis (50A) vers le fond (22) de la rainure (20), une première extrémité (70) de l'organe de renvoi étant sollicitée en appui par la vis (50A) et une deuxième extrémité (72) de l'organe (66) de renvoi sollicitant le coin (42B) par appui.

10. Agencement selon l'une quelconque des revendications précédentes, **caractérisé en ce qu'**il comporte deux deuxièmes coins (42A, 42B) opposés qui présentent des directions de serrage verticales opposées, chaque deuxième coin (42A, 42B) étant commandé en coulissement respectivement par l'écrou (50B) et par la vis (50A) du même ensemble (50) vis-écrou.

## Patentansprüche

1. Anordnung zur Befestigung eines vertikalen Paneels (14) in einer länglichen Aufnahmenut (20) durch transversales Einspannen zwischen mindestens zwei transversal gegenüberliegenden Keilen (34A, 34B; 42A, 42B), wobei die Anordnung umfasst:
- mindestens einen ersten Keil (34A, 34B), der zwischen einer ersten vertikalen Fläche (24) der Nut(20) und einer ersten Fläche (36) des Paneels (14) eingefügt ist;
- mindestens einen zweiten, gegenüberliegenden Keil (42A, 42B), der gegenüber vom ersten Keil (34A, 34B) auf der anderen Seite des Paneels (14) montiert ist, wobei der zweite Keil (42A, 42B) zwischen einer zweiten vertikalen, gegenüberliegenden Fläche (26) der Nut (20) und einer zweiten, gegenüberliegenden Fläche (44) des Paneels (14) eingefügt ist, wobei der zweite Keil (42A, 42B) durch vertikales Gleiten mit einer zweiten ortsfesten Rampe (46, 62) zusammenwirkt, um die vertikale Ausrichtung des Paneels (14) zu regulieren;
- mindestens eine Schraube-Mutter-Baugruppe (50), die dazu vorgesehen ist, eine vertikale Übertragungsbeanspruchung des zweiten Keils (42A, 42B) in einer Einspannrichtung zwischen dem Paneel (14) und der zweiten Fläche (26) der Nut (20) zu erzeugen;
**dadurch gekennzeichnet, dass** die Schraube-Mutter-Baugruppe (50) auf derselben Seite des Paneels (14) wie der erste Keil (34A, 34B) angeordnet ist, wobei die Übertragungsbeanspruchung über ein bewegliches Umlenkelement (66, 76), das zwischen einer unteren Kante (32) des Paneels (14) und dem Boden (22) der Nut (20) eingefügt ist, auf den zweiten Keil (42A, 42B) übertragen wird.

2. Anordnung nach dem vorstehenden Anspruch, **dadurch gekennzeichnet, dass** das Umlenkelement (66) ein starres Teil ist, das drehbar um eine Längsachse zwischen dem Boden (22) der Nut (20) und der unteren Kante (32) des Paneels (14) montiert ist.

3. Anordnung nach Anspruch 1, **dadurch gekennzeichnet, dass** das Umlenkelement (76) ein nachgiebiges Element ist, das auf Zug um eine ortsfeste Winkelumlenkstütze (30) arbeitet, die die untere Kante (32) des Paneels (14) umgibt.

4. Anordnung nach dem vorstehenden Anspruch, **dadurch gekennzeichnet, dass** die ortsfeste Winkelumlenkstütze in einem Stützblock (30) realisiert ist, der auf der unteren Kante (32) des Paneels (14) aufsitzt und der zwischen dem Paneel (14) und dem Boden (22) der Nut (20) eingefügt ist.

5. Anordnung nach einem der Ansprüche 3 bis 4, **dadurch gekennzeichnet, dass** die Einspannrichtung des zweiten Keils (42A) zum Boden der Nut gerichtet ist, wobei das Umlenkelement (76) beim Einspannen des Keils (42A) auf Zug arbeitet.

6. Anordnung nach dem vorstehenden Anspruch, **dadurch gekennzeichnet, dass** die vertikale Übertragungsbeanspruchung durch vertikale Bewegung der Mutter (50B) zu einer oberen Öffnung der Nut (20) erzeugt wird, wobei ein erstes Ende (78) des Umlenkelements (76) bei Bewegung fest mit der Mutter (50B) verbunden ist und ein zweites Ende (80) des Umlenkelements (76) bei Bewegung fest mit dem zweiten Keil (42A) verbunden ist.

7. Anordnung nach Anspruch 2, **dadurch gekennzeichnet, dass** die Einspannrichtung mindestens eines zweiten, gegenüberliegen Keils (42B) zu einer oberen Öffnung der Nut (20) gerichtet ist, wobei das Umlenkelement (66) beim Einspannen des Keils (42B) unter Druck arbeitet.

8. Anordnung nach dem vorstehenden Anspruch, **dadurch gekennzeichnet, dass** das Umlenkelement entlang einer kreisbogenförmigen Bahn parallel zum Boden (22) der Nut (20) gleitet.

9. Anordnung nach dem vorstehenden Anspruch, **dadurch gekennzeichnet, dass** die vertikale Übertragungsbeanspruchung durch die Bewegung der Schraube (50A) zum Boden (22) der Nut (20) erzeugt wird, wobei ein erstes Ende (70) des Umlenkelements aufliegend durch die Schraube (50A) belastet wird und ein zweites Ende (72) des Umlenkelements (66) den Keil (42B) durch Aufliegen belastet.

10. Anordnung nach einem der vorstehenden Ansprüche, **dadurch gekennzeichnet, dass** sie zwei gegenüberliegende Keile (42A, 42B) umfasst, die gegenüberliegende vertikale Einspannrichtungen aufweisen, wobei jeder zweite Keil (42A, 42b) durch die Mutter (50B) bzw. durch die Schraube (50A) derselben Schraube-Mutter-Baugruppe (50) unter Gleiten angetrieben wird.

## Claims

1. Arrangement for the fastening of a vertical panel (14) in a longitudinal receiving groove (20) by transverse clamping between at least two transversely opposite wedges (34A, 34B; 42A, 42B), with the arrangement comprising:
- at least one first wedge (34A, 34B) which is interposed between a first vertical face (24) of the groove (20) and a first face (36) of the panel (14);
- at least one opposite second wedge (42A, 42B) mounted facing the first wedge (34A, 34B) of the other side of the panel (14), with the second wedge (42A, 42B) being interposed between a second opposite vertical face (26) of the groove (20) and a second opposite face (44) of the panel (14), with the second wedge (42A, 42B) cooperating via vertical sliding with a second fixed ramp (46, 62) in order to adjust the verticality of the panel (14);
- at least one screw-nut assembly (50) intended to produce a vertical translation force of the second wedge (42A, 42B) in a clamping direction between the panel (14) and the second face (26) of the groove (20);
**characterised in that** the screw-nut assembly (50) is arranged on the same side of the panel (14) as the first wedge (34A, 34B), with the translation force being transmitted to the second wedge (42A, 42B) by the intermediary of a mobile deflection member (66, 76) which is interposed between a lower edge (32) of the panel (14) and the bottom (22) of the groove (20).

2. Arrangement according to the preceding claim, **characterised in that** the deflection member (66) is a rigid part rotatably mounted about a longitudinal axis between the bottom (22) of the groove (20) and the lower edge (32) of the panel (14).

3. Arrangement according to claim 1, **characterised in that** the deflection member (76) is a flexible member that works in traction around a fixed angle deflection support (30) which bypasses the lower edge (32) of the panel (14).

4. Arrangement according to the preceding claim, **characterised in that** the fixed angle deflection support is carried out in a crib (30) that straddles the lower edge (32) of the panel (14) and which is inserted between the panel (14) and the bottom (22) of the groove (20).

5. Arrangement according to any of claims 3 to 4, **characterised in that** the clamping direction of the second wedge (42A) is directed towards the bottom of the groove, with the deflection member (76) working in traction during the clamping of the wedge (42A).

6. Arrangement according to the preceding claim, **characterised in that** the vertical translation force is produced by displacement of the nut (50B) vertically towards an upper opening of the groove (20), a first end (78) of the deflection member (76) being integral in displacement with the nut (50B) and a second end (80) of the deflection member (76) being integral in displacement with said second wedge (42A).

7. Arrangement according to claim 2, **characterised in that** the clamping direction of at least a second opposite wedge (42B) is directed towards an upper opening of the groove (20), with the deflection member (66) working in compression during the clamping of the wedge (42B).

8. Arrangement according to the preceding claim, **characterised in that** the deflection member slides along a trajectory in an arc of circle parallel to the bottom (22) of the groove (20).

9. Arrangement according to the preceding claim **characterised in that** the vertical translation force is produced by the displacement of the screw (50A) towards the bottom (22) of the groove (20), with a first end (70) of the deflection member being urged against by the screw (50A) and a second end (72) of the deflection member (66) urging the wedge (42B) pressing.

10. Arrangement according to any preceding claim, **characterised in that** it comprises two second opposite wedges (42A, 42B) which have opposite vertical clamping directions, each second wedge (42A, 42B) being controlled in sliding respectively by the nut (50B) and by the screw(50A) of the same screw-nut assembly (50).
